# EUROPÄISCHE PATENTANMELDUNG

(11) **EP 1 391 689 A1**
(43) Veröffentlichungstag der Anmeldung: **25.02.2004**
(21) Anmeldenummer: 02405702.8
(22) Anmeldetag: 16.08.2002
(51) Int. Cl.: G01B 11/24

(54) **Einrichtung und Verfahren zum Detektieren von Tüllen**

(71) Anmelder: KOMAX HOLDING AG, 6036 Dierikon (CH)
(72) Erfinder: Ehlert Hilmar, 6005 Luzern (CH)
(74) Vertreter: EGLI-EUROPEAN PATENT ATTORNEYS

(57) **Zusammenfassung**

Es wird eine Einrichtung (100) zum Detektieren einer auf einem kabelförmigen Leitermaterial (10) aufschiebbaren Tülle (30)vorgeschlagen, bei der zwischen einer Lichtquelle (20) und einem optischen Sensor (40) das kabelförmige Leitermaterial (10) mit oder ohne einer Tülle gebracht werden kann. Der optische Sensor (40) ist als Zeilensensor mit einer Vielzahl von nebeneinander angeordneten Einzelsensoren ausgebildet. Die Zeile ist senkrecht zur Hauptrichtung des kabelförmigen Leitermaterials (10) angeordnet. Die geometrischen Verhältnisse sind so, dass der Zeilensensor (40) breiter ist als der Schatten, den ein auf das kabelförmige Leitermaterial (10) aufgeschobenen Tülle auf dem Zeilensensor wirft.

## Beschreibung

Die vorliegende Erfindung betrifft eine Einrichtung zum Detektieren von Tüllen, insbesondere von Tüllen, die auf einem Kabelende aufgesteckt sind. Weiterhin betrifft die Erfindung ein Verfahren zum Detektieren von Tüllen, insbesondere von auf einem Kabelende aufgesteckten Tüllen.

Bei der Konfektionierung von Kabelenden, bei der z.B. die Enden abisoliert und/oder mit einem Crimpstecker versehen oder auch auf eine andere Weise bearbeitet werden, ist es in gewissen Fällen üblich, auf die Kabelenden vor oder nach dem Abisoliervorgang Schütztüllen, z.B. aus Gummi oder einem gummiähnlichen Kunststoff, aufzustecken. Dieser Prozess wird üblicherweise in den Bearbeitungsprozess integriert und läuft - als ein Teil des Prozesses - mehr oder weniger automatisiert ab.

Eine Einrichtung zum Aufstecken von solchen Tüllen ist in der EP-0 626 738 A1 ausführlich beschrieben, wobei dort eine schrittweise weiterdrehbare Drehvorrichtung vorgesehen ist, die mehrere Dorne aufweist, wobei in einer ersten Stellung jeweils eine Tülle auf einen Dorn geschoben wird. In einer zweiten Stellung der Drehvorrichtung wird die Tülle mittels einer Aufschiebeeinheit zum Zwecke des Aufweitens auf einen dickeren Teil des Dornes geschoben. In einer weiteren Stellung der Drehvorrichtung wird die Tülle vom Dorn abgezogen, wobei die Tülle durch das Aufspreizteil im aufgeweiteten Zustand gehalten und auf das Kabel aufgeschoben wird. Dieser Vorgang nach der EP-A-0 626 738 läuft mit hoher Geschwindigkeit und auch sehr zuverlässig ab. Gleichwohl hat sich das Problem herausgestellt, dass zur Qualitätssicherung festgestellt werden sollte, ob bei dem Vorgang die Tülle auf das Kabelende aufgesteckt worden ist oder ob einer der äusserst seltenen Fehlvorgänge vorliegt.

In der EP-A-1 004 847 ist ein Verfahren und eine Einrichtung vorgeschlagen worden, mit dem insbesondere die Kantenstrukturen der Tülle dadurch detektiert werden sollen. Nach der EP-A-1 004 847 soll das Kabel über eine Blende bewegt werden, wobei die Blende je nach momentaner Kantenstruktur des Kabels mehr oder weniger abgedeckt wird. Dadurch wird die die Blende passierende Lichtmenge je nach der Kantenstruktur des Kabels verändert, wodurch die Kantenstrukturen des Kabels darstellbar sind.

Grundsätzlich ist dieses Verfahren gut geeignet, um qualitätssichernd den vorangehenden Vorgang des Aufstülpens der Tülle zu überwachen, ja sogar die richtige Position der Tülle auf dem Kabel zu überprüfen. Allerdings hat sich herausgestellt, dass dieser bewegungsorientierte Detektiervorgang beim automatisch und damit recht schnell ablaufenden Bearbeitungsprozess zeitlich zu einem Nadelöhr werden und damit die Taktzeiten negativ beeinflussen kann. Dies ist für einen reinen Überwachungsprozess selbstverständlich nicht oder nur bis zu einem bestimmten Masse akzeptabel.

Andererseits ist es aber auch nicht in jedem Falle notwendig, die genaue Position der Tülle auf dem Kabelende zu detektieren. Es hat sich nämlich herausgestellt, dass von den seltenen Fällen, in denen ein Fehlvorgang beim Aufbringen der Tülle auf das Kabelende vorliegt, die überwiegend meisten Fälle dadurch passieren, dass überhaupt keine Tülle auf das Kabelende aufgebracht wird oder bleibt. In diesen Fällen soll dann also - möglichst ohne jeden Zeitverlust und ohne zusätzliche Bewegungen - festgestellt werden, ob sich eine Tülle auf dem Kabel befindet.

Aber auch in den Fällen, in denen die Position der Tülle auf dem Kabel festgestellt werden soll, ist eine schwenkende Bewegung des Kabels beim Detektieren - im Sinne der Ausgestaltung dieser Erfindung - zu vermeiden

Es ist also die Aufgabe der vorliegenden Erfindung, eine Einrichtung vorzuschlagen, mit der die Überwachung des richtigen Aufsetzens der Tülle auf ein Kabelende möglich ist, ohne dass das Kabelende zu diesem Zwecke bewegt werden müsste. Soll dann die Position der Tülle - und nicht nur das Aufsetzen - ermittelt werden, so soll eine Schwenkbewegung zum Zwecke des optischen Messvorganges vermieden werden.

Die Erfindung löst die Aufgabe durch eine Einrichtung nach Anspruch 1. Dabei haben die Massnahmen der Erfindung zunächst einmal zur Folge, dass mit der Einrichtung grundsätzlich das Detektieren der Tülle auf dem Kabel ohne Bewegung irgendwelcher Teile durchgeführt werden kann. Für den Fall, dass die axiale Position der Tülle auf dem Kabel auch festgestellt werden soll, kann dabei entweder die optische Messeinrichtung im Sinne eines Scanners verschoben werden, es kann das Kabelende axial verschoben werden, was durch eine bereits vorhandene Verschiebeeinrichtung ohne weiteren technischen - aber selbstverständlich mit einem gewissen zeitlichen - Aufwand verbunden ist, oder es kann als optische Messeinrichtung eine Sensormatrix vorgesehen werden, bei der nicht nur eine, sondern eine Vielzahl von Querzeilen beobachtet werden.
In der Grundversion der Erfindung mit einem nicht beweglichen Zeilensensor sind die Vorteile der Erfindung besonders realisiert, nämlich eine technisch sehr einfache Ausführung, die als reine digitale Ausführung keine elektrischen Abgleiche erfordert. Weiterhin ist keine spezielle Optik erforderlich, da die optischen Elemente im Gerät integriert sind. Vorteilhaft ist in dieser Grundversion insbesondere, dass es möglich ist, beim Detektieren des Zustandes "keine Tülle" ohne Rückbewegungen des Leiters sofort eine Nachbestückung auszuführen.

Besonders vorteilhaft ist ein Verfahren nach Anspruch 5, bei dem - entsprechend dem Vorrichtungsanspruch 1 - ein Verfahren zum Detektieren einer Tülle auf dem Kabel vorgeschlagen wird.

Weitere vorteilhafte Einzelheiten der Erfindung sind in den abhängigen Ansprüchen dargelegt.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - eine Vorrichtung und ein dazugehöriger Verfahrensablauf zur vorliegenden Erfindung erläutert wird.

In den Zeichnungen zeigen:
- Fig. 1: eine schematische Ansicht der Aufbringvorrichtung für Tüllen auf einem Kabel mit der Einrichtung gemäss der vorliegenden Erfindung;
- Fig. 2: eine Vorderansicht der Vorrichtung nach Figur 1;
- Fig. 3: eine Seitenansicht der Vorrichtung nach Figur 1;
- Fig. 4: eine schematische Ansicht der Einrichtung gemäss der vorliegenden Erfindung mit einem elektronischen Blockdiagramm;
- Fig. 5: eine perspektivische Darstellung der optischen Messanordnung vor dem Aufbringen der Tülle;
- Fig. 6: eine perspektivische Darstellung der optischen Messanordnung nach dem Aufbringen der Tülle;
- Fig. 7: ist eine schematische Seitendarstellung der Verhältnisse nach Fig. 5 (Fig. 7a) und Fig. 6 (Fig. 7b);
- Fig. 8: eine Darstellung des Messergebnisses mit Tülle (Fig. 8a und 8b);
- Fig. 9: eine Darstellung des Messergebnisses ohne Tülle (Fig. 9a und 9b).

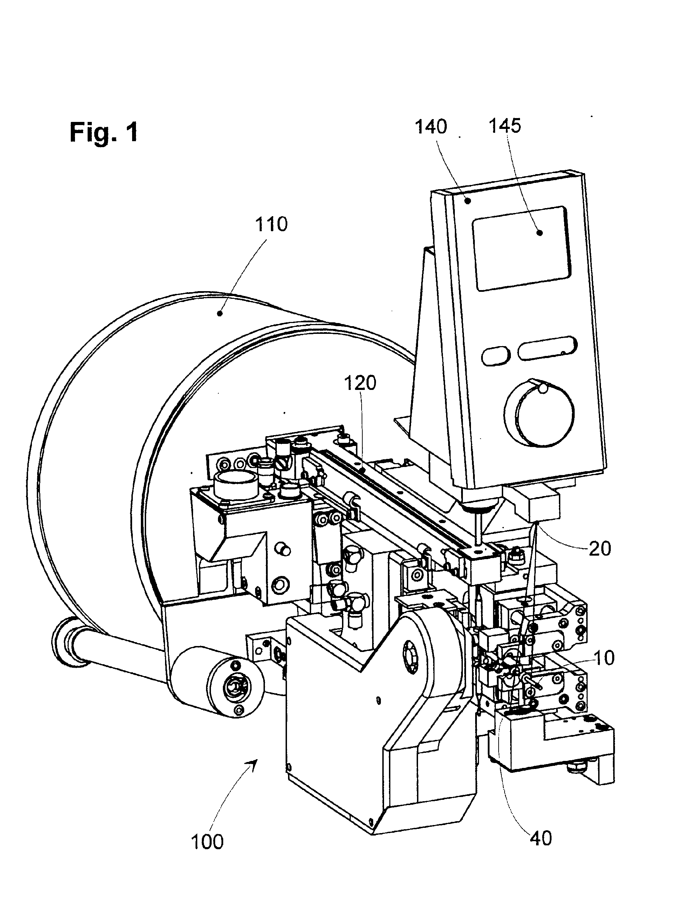

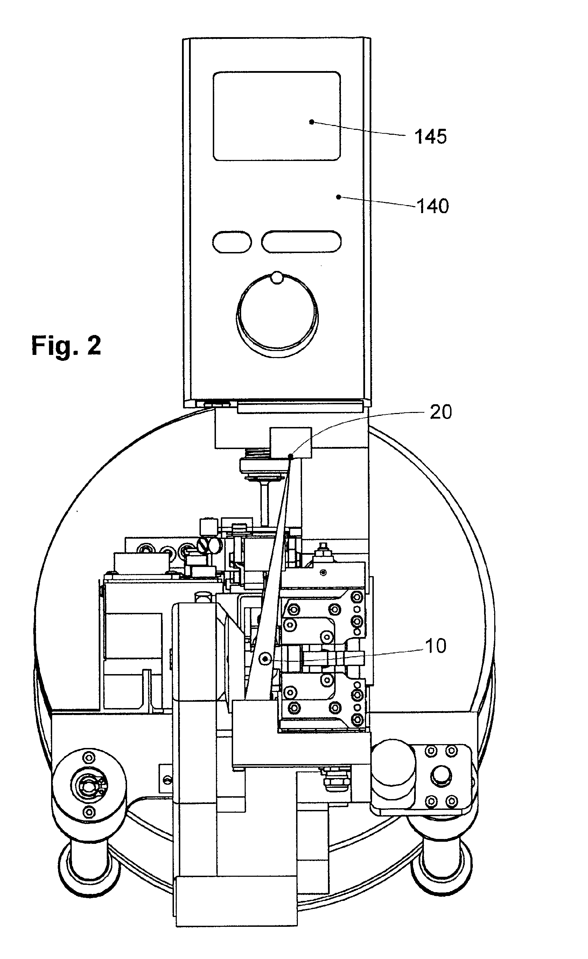

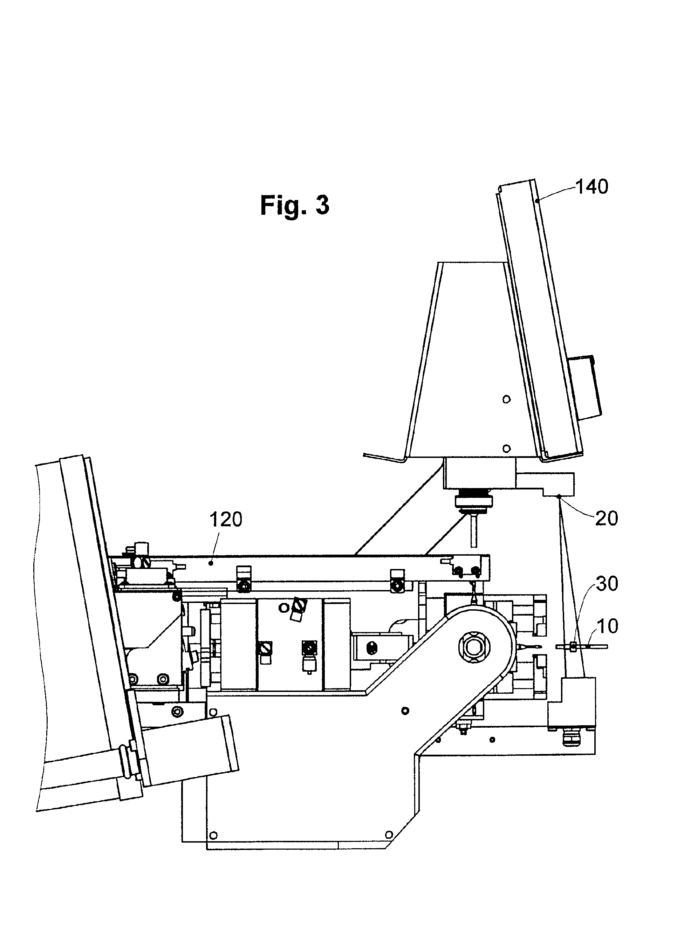

In der in den Figuren 1 bis 3 mit 100 bezeichneten Vorrichtung zur Bestückung von Kabelenden 10 mit Schutztüllen 30 werden die Tüllen aus einer Trommel 110 auf eine Tüllenfördereinheit 120 aufgereiht und von dort auf einen mit einem Pneumatikzylinder bewegten Dorn 130 aufgebracht und mit dem Dorn 130 um 270° gedreht und auf das Kabelende 10 aufgebracht. Da dieser Vorgang und die dazu gehörenden Elemente schon in der EP-0 626 738 A1 ausführlich beschrieben worden sind, soll hier - durch Referenznahme auf die EP-A-0 626 738 auf eine detaillierte Beschreibung verzichtet werden.

Nachdem die Tülle aufgesteckt wurde, ist der Überwachungsvorgang durchzuführen. Dazu wird von der Lichtquelle 20 ein - im Ausführungsbeispiel schräg ausgerichteter - Lichtstrahl auf die Sensorzeile 40 gesendet, wobei das mit der Tülle bestückte Kabelende in diesem Strahlengang eingebracht ist. Die Vorteile des erfindungsgemässen Verfahrens und der entsprechenden Vorrichtung werden insbesondere an der Figur 1 deutlich, nämlich die in das Gerät integrierte Überwachung, zu deren Anwendung keine Querbewegung (Seitenbewegung) und grundsätzlich auch keine Längsbewegung des Kabels oder der Überwachungselemente notwendig sind. Der Ablauf erfolgt mit der Einrichtung gemäss der vorliegenden Erfindung automatisch. Das Ergebnis jedes Überwachungsvorganges kann auf dem Display 145 der Bedieneinheit 140 dargestellt werden. Im vorliegenden Ausführungsbeispiel ist es möglich, dass beim Detektieren des Zustandes "keine Tülle" ohne Rückbewegungen des Leiters sofort eine Nachbestückung ausgeführt werden.

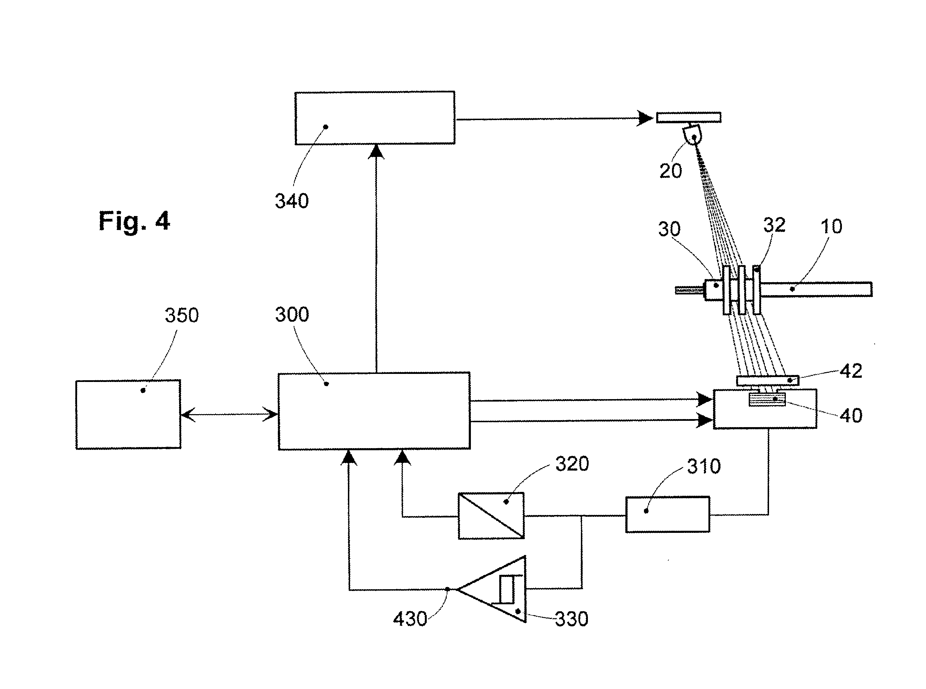

In Figur 4 ist der eigentliche Messvorgang bildlich dargestellt. Aus der Lichtquelle 20, die im vorliegenden Ausführungsbeispiel als rotes Licht aussendende LED ausgebildet ist, wird das Kabel, ein festgelegtes Stück vor seinem Ende, beleuchtet und das Licht fällt auf eine Sensorzeile. Im Ausführungsbeispiel ist über dem Zeilensensor 40 ein Rotlichtfilter 42 eingebaut, um störendes Streulicht abzufangen. Der Zeilensensor 40 weist im vorliegenden Ausführungsbeispiel eine Zeilenbreite von 256 Pixel auf einer Länge von 16 mm auf.

Die zur Messung bereitgestellte Elektronik besteht in ihrem Zentrum aus einem Mikroprozessor 300, der an den Zeilensensor ein Startsignal SI und eine Clocksignal CLK abgibt. Das Ausgangssignal des Zeilensensor 40 beaufschlagt einen Tiefpassfilter 310, dessen Ausgang wiederum einen A/D-Wandler 320 und einen Schmitt-Trigger 330 beaufschlagt, deren Ausgangssignale im Mikroprozessor 300 weiterverarbeitet werden. Das zur Messung verarbeitete Signal ist das des Schmitt-Triggers 330, während das Signal des A/D-Wandlers 320 im vorliegenden Ausführungsbeispiel lediglich dazu benutzt wird, z.B. allfällige Verschmutzungen auf dem Zeilensensor 40 bzw. auf dem Rotlichtfilter 42 festzustellen. Der Mikroprozessor 300 bedient weiterhin die Stromsteuerung 340 für die Lichtquelle 20, einschliesslich der Ein-/Ausschaltung und gibt die erstellten Signale an ein Prozessormodul 350 ab, das dann z.B. die Warnsignale beim Vorliegen einer Fehlbestückung abgibt und/oder die jeweiligen Zeilendaten auf dem Display 145 der Bedieneinheit 140 darstellt.

In Figur 4 ist deutlich zu erkennen, dass der Lichteinfall der Lichtquelle 20 schräg nach vorne zum Kabel und auch zum Zeilensensor 40 ausgerichtet ist. Dies ist für die - im hier beschriebenen und gezeigten Ausführungsbeispiel - verwendeten Tüllen 30 mit Rippen 32 eine wesentliche Verbesserung der Zuverlässigkeit der Messung, da dadurch das Licht nicht durch die Rippen 32 hindurchleuchten kann, sondern in jedem Falle der maximale Hauptquerschnitt der Tüllen 30 berücksichtigt wird. Wenn z.B. Tüllen 30 verwendet würden, die keine Rippen aufweisen, so ist der Schrägeinfall des Lichtes diesbezüglich nicht von Bedeutung.

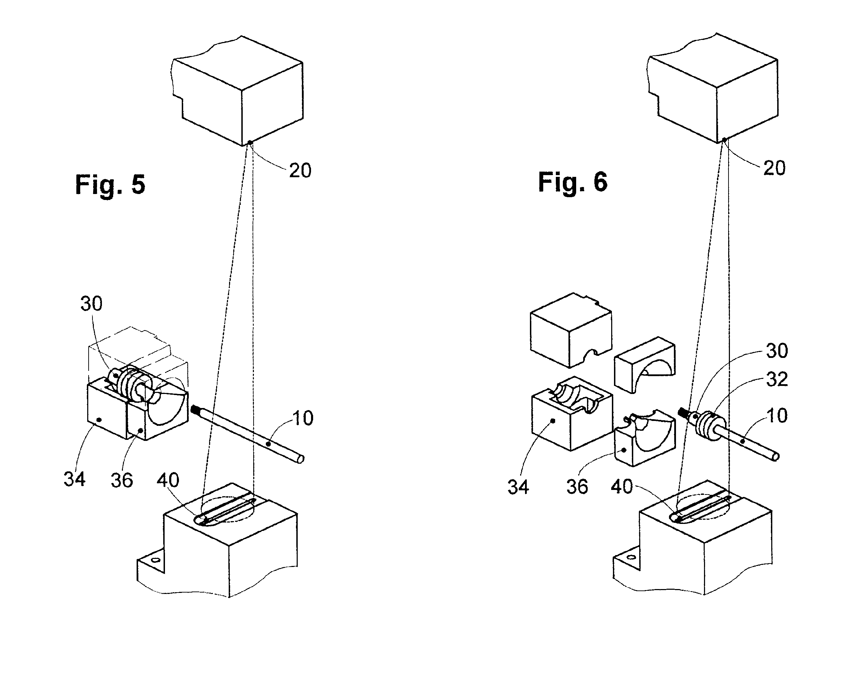

In Figur 5 ist der Messvorgang vor dem Aufsetzen der Tülle 30 dargestellt. Die Tülle 30 ist noch im Tüllenkäfig 34 eingesetzt und die Spreizhülse 36 ist in die Tüllenöffnung eingesetzt, um diese zu erweitern. Es sollte festgehalten werden, dass in der normalen Ausführung des hier beschriebenen Vorganges in dieser Situation keine Messung vorgesehen ist.

In Figur 6 allerdings ist die Tülle 30 auf das Kabelende aufgesetzt und der Zeilensensor 40 misst die seitlich Ausdehnung der Tülle 30 nach dem vorstehend beschriebenen Messprinzip.

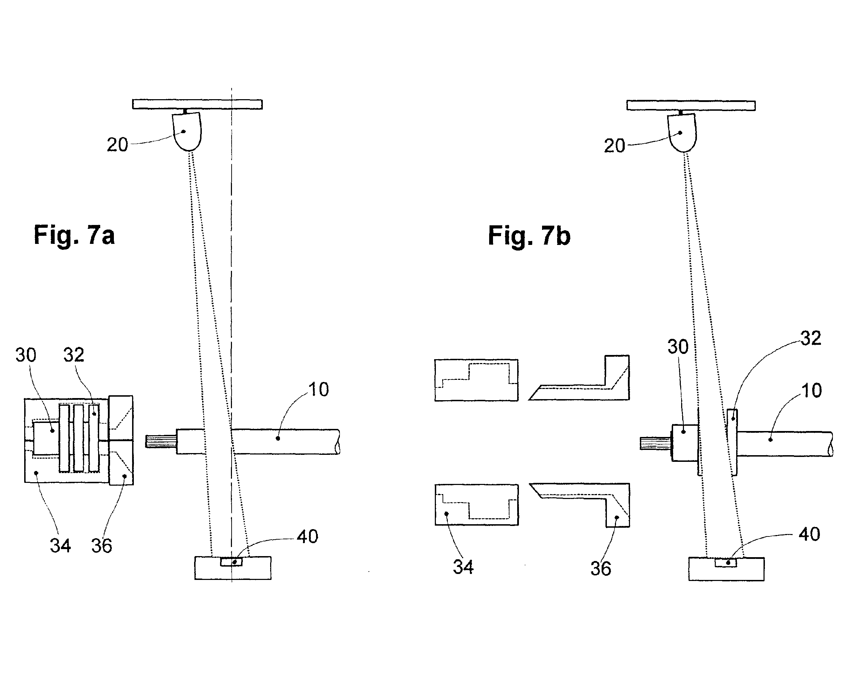

Die in den Figuren 5 und 6 perspektivisch dargestellten Zusammenhänge sind in Fig. 7a und 7b nochmals als Seitenansicht gezeigt, wobei in diesem Falle - alternativ zum aber gleichwirkend mit dem vorstehend beschriebenen Ausführungsbeispiel - der Lichtkegel der Lichtquelle 20 schräg nach hinten geworfen wird, bezogen auf das Kabelende.

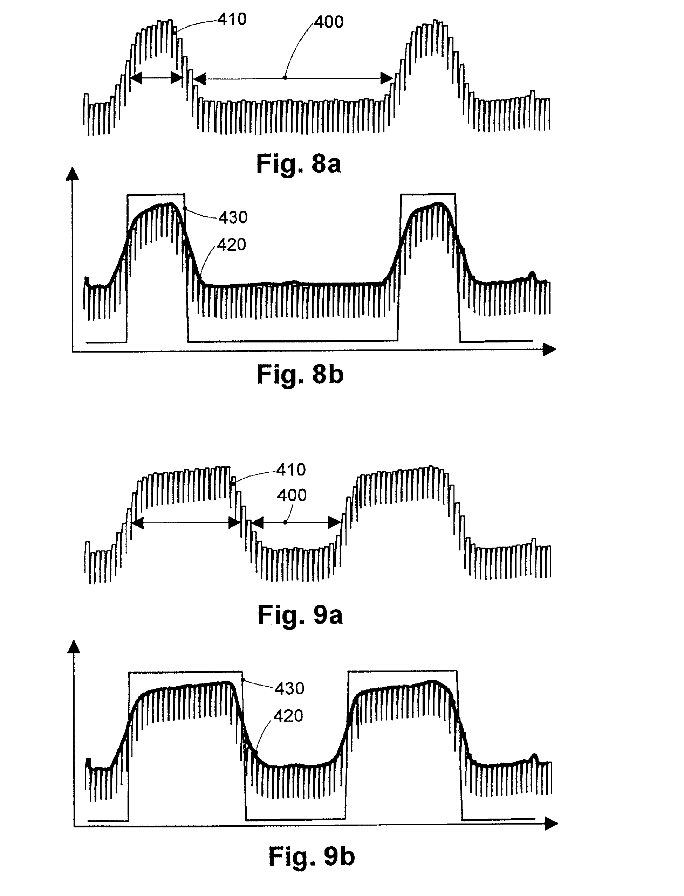

Das Ergebnis einer Messung mit und ohne Tülle 30 ist in Figur 8a und 9a dargestellt. Deutlich zu sehen ist die Verbreiterung des Schattens 400 durch die Tülle 40. Die spikeförmigen Ausschläge auf der Messkurven 410 werden jeweils durch den Tiefpassfilter 310 mit einer Grenzfrequenz von 1 MHz zu einer Profilkurve 420 ausgeglichen. Das eigentliche verwendete Signal ist aber der Ausgang 430 des Schmitt-Triggers 330 nach dem Auswerten der Flanken und dem Digitalisieren (Fig. 8b). Würde nach der Tüllenbestückung das Signal gemessen, wie in Fig. 9a und 9b dargestellt, dann müsste ein Alarm in der nachfolgenden Steuerung 350 ausgelöst werden.

Wenn nun - in einer ersten alternativen Ausführung - nicht nur die Tatsache überprüft werden soll, dass die Tülle 30 grundsätzlich richtig auf dem Kabelende sitzt, sondern auch noch die genaue Position bestimmt werden soll, so kann-neben der einfachen Lösung der Verwendung einer optischen Matrix - das Kabelende für eine Reihe von Messungen bewegt werden. Dadurch wird festgestellt, ob z.B. die vordere und/oder die hintere Kante der Tülle 30 an ihrer Sollposition sitzt. Das Bereitstellen einer Bewegungseinrichtung für das Kabelende mit der Tülle 30 stellt dabei keinen zusätzlichen Aufwand dar, da die Kabelbearbeitungsvorrichtung eine solche Bewegungseinrichtung in jedem Falle vorgesehen wird. Es muss aber festgehalten werden, dass zwar einerseits die Basis der Messdaten durch diese Erweiterung verbessert wird, dass aber andererseits der Vorteil einer schnellen Überwachung des Aufbringvorganges nicht mehr vollumfänglich ausgenutzt werden kann. In einer zweiten alternativen Ausführung wird nicht das Kabelende mit der Tülle 30 bewegt, sondern - gleichwirkend - die optische Einheit mit Lichtquelle 20 und Zeilensensor 40. Der Fachmann wird leicht einsehen, dass diese beiden alternativen Ausführungen auch kombiniert miteinander durchgeführt werden können.

## Patentansprüche

1. Einrichtung (100) zum Detektieren eines auf einem kabelförmigen Leitermaterial (10) aufschiebbaren Gegenstandes, insbesondere einer Tülle (30), mit
- einer Lichtquelle (20),
- einem optischen Sensor (40), mit dem das von der Lichtquelle (20) ausgesendete Licht detektiert werden kann, wobei die Einrichtung so vorgesehen ist, dass zwischen der Lichtquelle (20) und dem optischen Sensor (40) das kabelförmige Leitermaterial (10) mit oder ohne einem darauf aufgeschobenen Gegenstand, insbesondere einer Tülle, gebracht werden kann,
**dadurch gekennzeichnet, dass**
- der optische Sensor (40) als Zeilensensor mit einer Vielzahl von nebeneinander angeordneten Einzelsensoren ausgebildet ist,
- wobei die genannte Zeile senkrecht zur Hauptrichtung des kabelförmigen Leitermaterials (10) angeordnet ist und
- wobei die geometrischen Verhältnisse so vorgesehen sind, dass der Zeilensensor (40) breiter ist als oder zumindest gleich breit ist wie der Schatten, den ein auf das kabelförmige Leitermaterial (10) aufgeschobener Gegenstand, insbesondere eine Tülle (30), auf dem Zeilensensor wirft.

2. Einrichtung nach Anspruch 1, **dadurch gekennzeichnet, dass** die Lichtquelle (10) gegenüber dem Zeilensensor (40) versetzt angeordnet ist, so dass das von der Lichtquelle (10) ausgesendete Licht schräg auf den Zeilensensor (40) einfällt.

3. Einrichtung nach Anspruch 1 oder 2, **dadurch gekennzeichnet, dass** das kabelförmige Leitermaterial (10) und/oder die Anordnung aus Lichtquelle (20) und optischem Sensor (40) in der Hauptrichtung des kabeiförmigen Leitermaterials (10) zum Zwecke eine Vielzahl von Zeilenmessungen verschiebbar eingerichtet sind.

4. Einrichtung nach einem der vorstehenden Ansprüche, **gekennzeichnet durch** eine Vielzahl von hintereinander angeordneten optischen Zeilensensoren (40).

5. Verfahren zum Detektieren eines auf einem kabelförmigen Leitermaterial (10) aufschiebbaren Gegenstandes, insbesondere einer Tülle (30), wobei von einer Lichtquelle (20) ein Lichtstrahl auf einem optischen Sensor (40) gesendet und von dem optischen Sensor (40) das von der Lichtquelle (20) ausgesendete Licht detektiert wird, wobei zwischen der Lichtquelle (20) und dem optischen Sensor (40) das kabelförmige Leitermaterial (10) mit einem darauf aufgeschobenen Gegenstand, insbesondere einer Tülle, gebracht wird,
**dadurch gekennzeichnet, dass**
- mit dem optischen Sensor (40) eine Zeilenmessung mit einer Vielzahl von nebeneinander ausgeführten Einzelmessungen durchgeführt wird,
- wobei die genannte Zeile senkrecht zur Hauptrichtung des kabelförmigen Leitermaterials (10) angeordnet ist und
- wobei das kabelförmige Leitermaterial (10) so zwischen die Lichtquelle und den optischen Sensor gebracht wird, dass der Schatten, den ein auf das kabelförmige Leitermaterial (10) aufgeschobener Gegenstand, insbesondere eine Tülle, auf dem optischen Sensor (40) wirft, schmaler ist als die Zeilenbreite des optischen Sensors (40).

6. Verfahren nach Anspruch 5, **dadurch gekennzeichnet, dass** die Lichtquelle (10) gegenüber dem optischen Sensor (40) versetzt angeordnet wird, so dass das von der Lichtquelle (10) ausgesendete Licht schräg auf den Zeilensensor (40) einfällt.

7. Verfahren nach Anspruch 5 oder 6, **dadurch gekennzeichnet, dass** das kabelförmige Leitermaterial (10) und/oder die Anordnung aus Lichtquelle (20) und optischem Sensor (40) in der Hauptrichtung des kabelförmigen Leitermaterials (10) zum Zwecke einer Vielzahl von Zeilenmessungen verschoben wird.

8. Einrichtung nach einem der vorstehenden Ansprüche 5 bis 7, **dadurch gekennzeichnet, dass** mit einer Vielzahl von hintereinander angeordneten optischen Zeilensensoren (40) ein zweidimensionales Abbild des Schattens, den ein auf das kabelförmige Leitermaterial (10) aufgeschobener Gegenstand, insbesondere eine Tülle (30), auf dem optischen Sensor (40) wirft, aufgenommen wird.

9. Verwendung einer Einrichtung nach einem der Ansprüche 1 bis 4 zur Durchführung der Determinierung, ob eine Schutztülle auf einem Kabelende richtig positioniert ist, durch eine optische Messung, **dadurch gekennzeichnet, dass** weder das Kabelende noch die Einrichtung zum Zwecke des Messens bewegt wird.

10. Verwendung einer Einrichtung nach einem der Ansprüche 1 bis 4 zur Durchführung der Determinierung, ob eine Schütztülle auf einem Kabelende richtig positioniert ist, durch eine optische Messung, **dadurch gekennzeichnet, dass** das Kabelende und/oder die Einrichtung beim Messvorgang in der Hauptrichtung des Kabels und/oder in seiner entgegengesetzten Richtung bewegt wird.
